Europäisches Patentamt

European Patent Office

Office européen des brevets

(11) Veröffentlichungsnummer: **0 445 834 A2**

# (12) EUROPÄISCHE PATENTANMELDUNG

(21) Anmeldenummer: **91103576.4**

(51) Int. Cl.5: **B60C 27/06**

(22) Anmeldetag: **08.03.91**

(30) Priorität: **09.03.90 DE 4007567**

(43) Veröffentlichungstag der Anmeldung:
**11.09.91 Patentblatt 91/37**

(84) Benannte Vertragsstaaten:
**AT BE CH DE FR LI NL SE**

(71) Anmelder: **Steirische Kettenfabriken Pengg-Walenta KG**
**Theodor-Körner Strasse 59**
**A-8021 Graz(AT)**

(72) Erfinder: **Kronsteiner, Herbert, Dipl.-Ing.**
**Strassgangerstrasse 182**
**A-8052 Graz(AT)**
Erfinder: **Walenta, Walter, Dipl.-Ing.**
**Millöckergasse 22**
**A-8010 Graz(AT)**

(74) Vertreter: **Fehners, Klaus Friedrich, Dipl.-Ing.**
**Dipl.-Wirtsch.-Ing. et al**
**Patentanwälte Dipl.-Ing. A. Wedde Dipl.-Ing.**
**K. Empl Dipl.-Ing., Dipl.-Wirtsch.-Ing. K.**
**Fehners Schumannstrasse 2**
**W-8000 München 80(DE)**

(54) **Gleitschutzelement zum Einbau in das aus Kettenstrangabschnitten gebildete Laufnetz von Gleitschutzketten für Fahrzeugreifen.**

(57) Die Erfindung betrifft ein Gleitschutzelement zum Einbau in das aus Kettenstrangabschnitt gebildete Laufnetz von Gleitschutzketten für Fahrzeugreifen, wobei das Gleitschutzelement als aus einem Gummi- oder Kunststoffmaterial hergestellte Platte bestimmter Abmessung ausgebildet ist und mit seiner Unterseite auf der Reifenoberfläche aufliegt und entweder mit seiner Oberseite unter einem Abschnitt des Laufnetzes der Gleitschutzkette oder mit seiner Unterseite über einen Abschnitt des Laufnetzes angeordnet ist, wobei Oberseite oder Unterseite Ausnehmungen aufweisen, welche den horizontal angeordneten Gliedern des zugeordneten Abschnittes des Laufnetzes formmäßig angepaßt sind und diese aufnehmen und wobei die Platte weiterhin Schlitze aufweist, in welche die vertikal angeordneten Glieder einstehen.

FIG.1

EP 0 445 834 A2

Die Erfindung betrifft ein Gleitschutzelement zum Einbau in das aus Kettenstrangabschnitten gebildete Laufnetz von Gleitschutzketten für Fahrzeugreifen nach dem Oberbegriff des Patentanspruches 1.

Gleitschutzketten mit in ihren Laufnetzen integrierten plattenförmigen Gleitschutzelementen sind in einer Vielzahl von Druckschriften beschrieben, beispielsweise in der DE-OS 37 22 900.

Die in dieser Offenlegungsschrift beschriebene Gleitschutzvorrichtung für Fahrzeugräder weist ein Laufnetz auf, welches in Radumfangsrichtung betrachtet paarweise nebeneinander und im Abstand voneinander angeordnete, parallel zueinander verlaufende Kettenstrangabschnitte und diese miteinander verbindende und im Abstand voneinander haltende, über den Radumfang verteilte Bauteile mit Gleitschutzelementen bildenden Vorsprüngen mit Spikes aufweist.

Dabei sind die Bauteile und ihre Vorsprünge aus einem biegsamen Material, insbesondere Gummi oder Kunststoff, hergestellt.

Zwar sind die paarweise und parallel nebeneinander verlaufenden Kettenstrangabschnitte durchgehend ausgebildet, jedoch nicht miteinander durch beispielsweise schräg zur Laufrichtung des Fahrzeugreifens angeordnete und ein Laufnetz bildende Kettenstrangabschnitte miteinander verbunden. Beide Kettenstrangabschnitte werden lediglich durch einen ebenfalls aus Gummi oder Kunststoff hergestellten Abstandhalter voneinander auf Abstand gehalten und welcher insbesondere bei Anfahr- und Bremsvorgängen dann von verhältnismäßig hohen Kräften beansprucht wird, wenn der Fahrzeugreifen bzw. die gesamte Gleitschutzvorrichtung im Bereich der Berührungsfläche des Fahrzeugreifens mit dem Boden nicht gleichmäßig belastet wird.

Die Abstandhalter können dabei so hohen Kräften ausgesetzt werden, daß sie nach längerer Betriebsdauer Ermüdungserscheinungen aufweisen und reißen.

Aus der DE-OS 38 31 626 ist eine Gleitschutzkette für Fahrzeugreifen bekannt, bei welcher ebenfalls plattenförmige Laufteilstücke im zwischen innerer und äußerer Halterung angeordneten Laufnetz vorhanden sind. Diese Laufteilstücke bilden annähernd Y-förmige Verbindungsstücke für Kettenstrangabschnitte des Laufnetzes und sind als flache Metallstücke ausgebildet, welche eine Ummantelung aus Gummi oder Kunststoff aufweisen, wobei ihre drei Enden als Flachhaken zum Einhängen in die Endglieder der jeweiligen Kettenstrangabschnitte ausgebildet sind.

In der Gummi- oder Kunststoffummantelung sind Spikes angeordnet, welche die Greiffähigkeit der Kette erhöhen.

Solche plattenförmigen Laufteilstücke können nur in speziell für diese angepaßte Laufnetze von Gleitschutzketten eingebaut bzw. integriert werden, die nachträgliche Ausrüstung einer ein aus Kettenstrangabschnitten zusammengesetztes Laufnetz aufweisenden Gleitschutzkette ist nicht möglich. Sollte ein solches plattenartiges Laufteilstück durch eine außergewöhnliche Belastung brechen, wird dadurch das Laufnetz der Gleitschutzkette zerstört und ein Weiterfahren mit einer solchen beschädigten Kette ist nicht möglich.

Aufgabe der Erfindung ist es nun, ein Gleitschutzelement nach dem Oberbegriff des Patentanspruches 1 zu schaffen, welches sich für den Einbau in ein aus Kettenstrangabschnitten gebildetes Laufnetz einer Gleitschutzkette eignet, wobei insbesondere das Laufnetz der Gleitschutzkette nicht verändert werden muß, vielmehr sogar eine nachträgliche Ausrüstung vorhandener Ketten mit solchen Gleitschutzelementen möglich ist.

Diese Aufgabe wird durch die im Kennzeichen des Patentanspruches 1 genannten Merkmale gelöst.

Diese erfindungsgemäße Ausbildung und Anordnung der plattenförmigen Gleitschutzelemente bietet mehrere Vorteile, nämlich zunächst, daß der Einbau derselben in die Gleitschutzkette nach Fertigstellung derselben durchgeführt werden kann, d. h. auch bereits verkaufte bzw. in den Lagern befindliche Gleitschutzketten können nachträglich mit solchen Gleitschutzelementen ausgerüstet werden. Ein weiterer Vorteil ist darin zu sehen, daß über die Gleitschutzelemente keine Laufnetz-Kräfte übertragen werden; das Laufnetz selbst wird durch die Gleitschutzelemente in keiner Weise geschwächt. Dies betrifft insbesondere die Möglichkeit der Ausbildung der Gleitschutzelemente aus Kunststoff, und schließlich können solche plattenförmige Gleitschutzelemente jeder beliebig mit Spurkreuzen im Laufnetz ausgestatteten Gleitschutzkette angepaßt und in diese eingebaut werden.

Weitere Vorteile ergeben sich aus den Merkmalen der Unteransprüche 2 bis 9.

Mehrere Ausführungsbeispiele der Erfindung werden nachstehend anhand der Zeichnungen erläutert.

Es zeigen:

Fig. 1    eine perspektivische Ansicht einer Gleitschutzkette für Fahrzeugreifen mit einer inneren und äußeren Halterung und einem dazwischen angeordneten Laufnetz mit plattenförmigen Gleitschutzelementen in zwei Ausführungsformen,

Fig. 2a    eine Unteransicht eines Ausführungsbeispieles eines auf einem Abschnitt des Laufnetzes befestigten Gleitschutzelementes der ersten Ausführungsform,

| | |
|---|---|
| Fig. 2b | einen Schnitt gemäß Linie II-II in Fig. 2a, |
| Fig. 3a | eine Draufsicht auf eine erste Ausbildung eines an einem aus drei Kettenstrangabschnitten gebildeten Spurkreuz des Laufnetzes befestigten Gleitschutzelementes der zweiten Ausführungsform, |
| Fig. 3b | eine Unteransicht auf das Gleitschutzelement nach Fig. 3a, |
| Fig. 3c | einen Schnitt gemäß Linie III-III in Fig. 3a, |
| Fig. 4 | eine teilweise geschnittene Seitenansicht auf eine zweite Ausführungsform des Gleitschutzelementes nach Fig. 3, |
| Fig. 5 | eine Draufsicht auf das Gleitschutzelement nach Fig. 4, |
| Fig. 6 | eine Draufsicht auf die als Stanzteil ausgebildete Sicherungsplatte, |
| Fig. 7 | eine Seitenansicht auf die Sicherungsplatte gem. Fig. 6, |
| Fig. 8 | eine Draufsicht auf die Sicherungsplatte gem. Fig. 6, jedoch mit aufgebogenen Sicherungszungen, |
| Fig. 9 | eine Seitenansicht auf die Sicherungsplatte gem. Fig. 8, |
| Fig. 10 | eine Unteransicht auf das Gleitschutzelement mit angedeutetem Spurkreuz, |
| Fig. 11 | eine dreiteilige Explosionsdarstellung des Gleitschutzelementes mit der die Spikes aufweisenden Kunststoffplatte a), dem Spurkreuz b) und der Sicherungsplatte c), |
| Fig. 12 | einen Schnitt gem. Linie XII-XII in Fig. 13 einer dritten Ausbildungsform des Gleitschutzelementes nach Fig. 3, |
| Fig. 13 | eine Draufsicht auf das Gleitschutzelement nach Fig. 12 mit Spurkreuz, |
| Fig. 14 | eine dreiteilige Explosionsdarstellung des Gleitschutzelementes gemäß Fig. 13, nämlich: a) teilweise geschnittene Seitenansicht der Sicherungsplatte, b) Draufsicht auf die Sicherungsplatte gemäß a), und c) einen Schnitt gemäß Linie c-c in Fig. 15, |
| Fig. 15 | eine Draufsicht auf die Kunststoffplatte des Gleitschutzelementes gem. Fig. 13, jedoch ohne Spurkreuz, |
| Fig. 16 | einen Schnitt durch eine vierte Ausbildung des Gleitschutzelementes gemäß Linie XVI-XVI in Fig. 17, |
| Fig. 17 | eine Draufsicht auf die Kunststoffplatte der vierten Ausbildung des Gleitschutzelementes mit Spurkreuz, je- |

| | |
|---|---|
| | doch ohne Sicherungsplatte, |
| Fig. 18 | eine Seitenansicht nur auf das Sicherungselement, wie in Fig. 16 gezeigt, |
| Fig. 19 | einen als Sicherungselement ausgebildeten Spike vor dem Einbau und |
| Fig. 20 | einen zwei Kunststoffplatten haltenden Spike nach dem Einbau. |

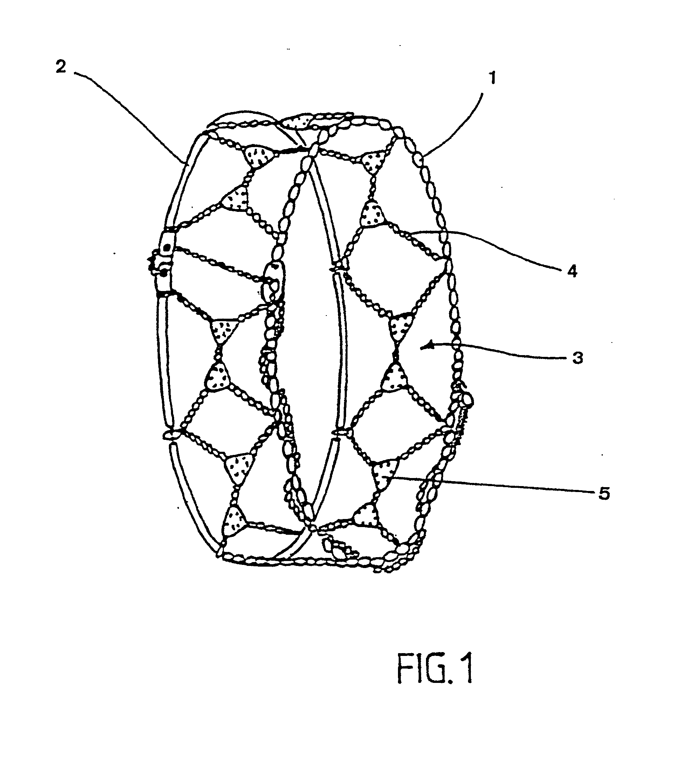

Fig. 1 zeigt eine perspektivische Ansicht einer aufgespannten Gleitschutzkette für Fahrzeugreifen, jedoch ohne Darstellung desselben. Die Gleitschutzkette weist eine äußere Halterung 1 und eine innere Halterung 2 und ein von beiden gehaltenes Laufnetz 3 auf. Das Laufnetz 3 besteht aus einer Mehrzahl von miteinander zu Spurkreuzen verknüpften Kettenstrangabschnitten, wobei die Spurkreuze jeweils von einem Verbindungsring und den Endgliedern der daran angeschlossenen Kettenstrangabschnitte 4, in dem hier gezeigten Falle von drei Kettenstrangabschnitten, gebildet werden.

An den jeweiligen Spurkreuzen sind plattenförmige Gleitschutzelemente 5 angeordnet, welche nachfolgend näher beschrieben werden, aber auch zwischen diesen und ggfs. an den Seitenstegen zu den Halterungen 1 bzw. 2 können an einem Kettenstrangabschnitt 4 Gleitschutzelemente 6 vorgesehen sein.

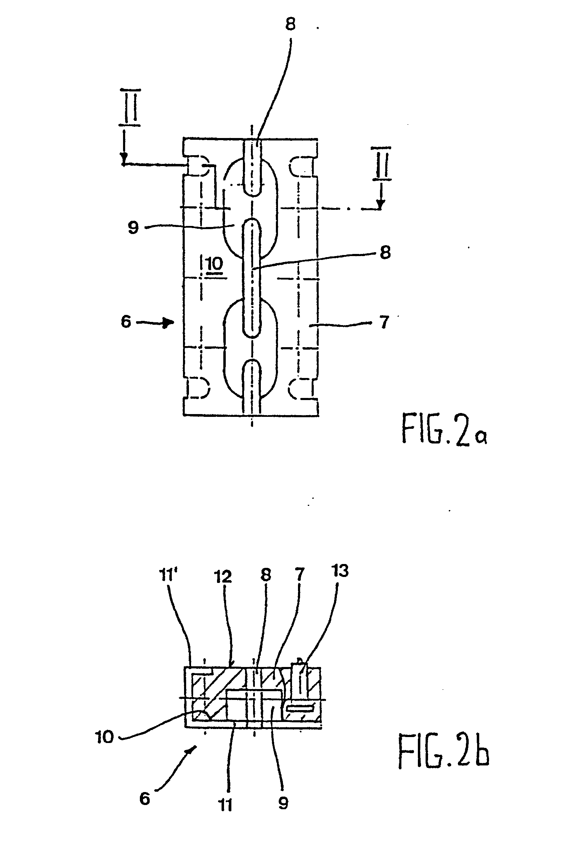

Eine Ausführungsform eines solchen "einfachen" plattenförmigen Gleitschutzelementes 6 ist in den Fig. 2a und 2b dargestellt.

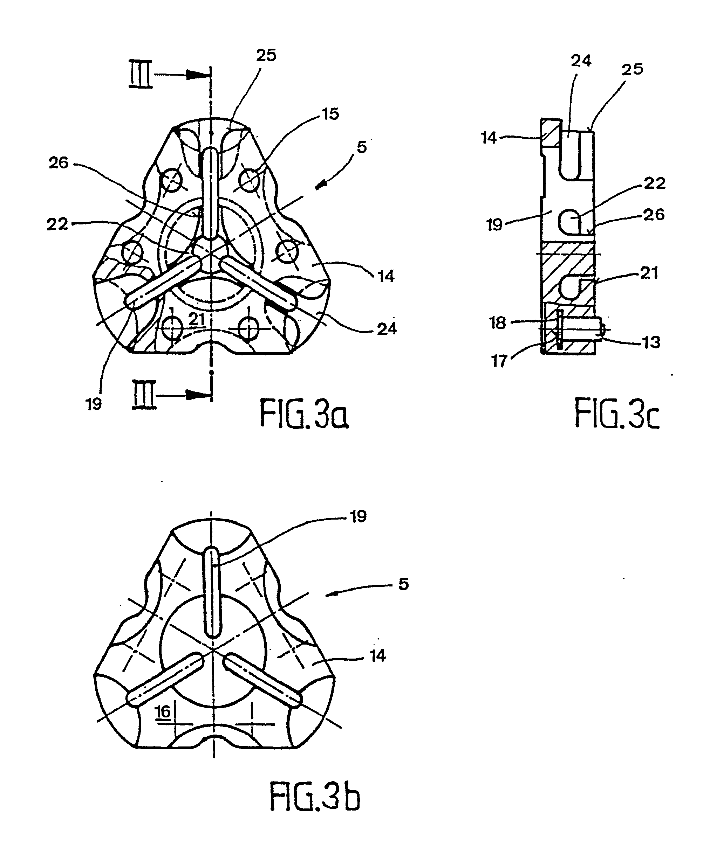

Dieses verhältnismäßig einfach ausgebildete Gleitschutzelement 6 entspricht in seinem Aufbau und der Konstruktion den nachstehend beschriebenen, jedoch für die Anordnung in Verbindung mit Spurkreuzen vorgesehenen und in Fig. 3 bis Fig. 20 dargestellten Gleitschutzelementen, lediglich mit dem Unterschied, daß es nicht an einem Knotenpunkt, sozusagen "zentral", im Laufnetz angeordnet ist, sondern im gradlinigen Verlauf eines Kettenstrangabschnittes innerhalb eines Laufnetzes, also entweder zwischen zwei Knotenpunkten oder in den Seitenstegen zu den Halterungen.

Dabei läßt die in Fig. 2a bzw. Fig. 2b gezeigte Ausführungsform dieses "einfachen" Gleitschutzelementes 6 erkennen, daß es mittig ein vertikal stehendes Kettenglied aufnehmen kann, es ist aber auch möglich, mittig ein horizontal liegendes Kettenglied vorzusehen.

Dieses Gleitschutzelement 6 besteht im einfachsten Falle aus einer eckigen, aber evtl. auch ovalen oder runden, aus Gummi- oder Kunststoffmaterial hergestellten Platte 7, welche im Verlauf der Kettenachse Schlitze 8 für die Aufnahme der vertikal stehenden Glieder und Vertiefungen bzw. Ausnehmungen 9 für die horizontal angeordneten Glieder des Kettenstrangabschnittes 4 aufweisen.

Vor einem Herauslösen aus dem Kettenstrangabschnitt 4 ist das Gleitschutzelement 6 durch eine auf seiner Unterseite 10 angeordneten Sicherungsplatte 11, welche mit Sicherungszungen 11' umgebogen zur Oberseite 12 des Gleitschutzelementes 6, gehalten ist. Zur Erhöhung der Gleitschutzwirkung der Gleitschutzelemente 6 können auf der der Fahrbahnoberfläche zugewandten und in Fig. 2b gezeigten Oberseite 12 Spikes 13 und/oder auch stollenförmige Vorsprünge vorgesehen sein.

Weitere alternative Ausbildungs- und Konstruk-tionselemente dieser "einfachen" Gleitschutzele-mente sind der nachfolgenden Beschreibung der annähernd dreieckförmigen und für die Anordnung unter Spurkreuzen des Laufnetzes vorgesehenen Gleitschutzelementen 5 zu entnehmen.

Unterschiedliche Ausbildungen solcher Gleitschutzelemente 5, 5', 5'', 5''', 5'''', sind in den Fig. 3a bis 20 dargestellt, auch diese bestehen im wesentlichen aus einer Kunststoffplatte 14 bestimmter Dicke, welche mit ihren Abmessungen den Spurkreuzen angepaßt ist, d.h. in den hier gezeigten Ausführungsbeispielen weist das Gleitschutzel-ment 5, 5', 5'', 5''', 5'''' eine im wesentlichen dreieckige Form auf, wobei jede Spitze des Dreiecks einem Ende der drei Kettenstrangabschnitte 4 zugeordnet ist, wie Fig. 3a und 3b zu entnehmen ist.

Benachbart zu den jeweiligen Seiten der dreieckförmigen Kunststoffplatte 14 sind Bohrungen 15, beispielsweise jeweils zwei Bohrungen je Seite, für darin einzusetzende Spikes 13 vorgesehen. Diese Bohrungen 15 weisen benachbart zu bzw. in der der Reifenoberfläche zugewandten Unterseite 16 Erweiterungen 17 auf, in welche der Spike 13, welcher an seinem unteren Ende einen tellerringförmigen Flansch 18 aufweist, eingesetzt ist.

In der Kunststoffplatte 14 sind Schlitze 19 vorgesehen, in welche die vertikal angeordneten Kettenglieder 20 des Spurkreuzes einstehen; auf der Oberseite 21 sind Vertiefungen bzw. Ausnehmungen vorgesehen und zwar eine kreisrunde Ausnehmung 22 für den darin einzubettenden Horizontalring 23 des Laufnetzes und, jeweils den Spitzen des Dreiecks zugeordnet, end-ovalförmige Ausnehmungen 24 für jeweils ein horizontal angeordnetes Kettenglied der Kettenstrangabschnitte 4.

Aufgrund dieser Ausbildung der Kunststoffplatte 14 kann diese ohne weiteres unter jeweils ein Spurkreuz der Gleitschutzkette eingesetzt bzw. aufgesteckt werden. Mit ihrer Unterseite 16 ist die Kunststoffplatte 14 der Reifenoberfläche zugewandt bzw. liegt auf dieser auf.

Um ein Herabfallen der Kunststoffplatte 14 von dem Spurkreuz zu verhindern, ist die Anordnung einer Sicherungsplatte, wie bei dem eingangs be-schriebenen "einfachen" Gleitschutzelement vorge-schlagen, nicht notwendig, vielmehr weist die Kunststoffplatte 14 lippenartige Vorsprünge 25 bzw. 26 auf, ersichtlich aus den Fig. 3a bis Fig. 3c, welche in die Oberseite 21 integriert sind und, bei im Spurkreuz eingebautem Zustand, die in den Fig. nicht dargestellten horizontalen Kettenglieder, insbesondere auch den Horizontalring, teilweise überdeckend halten.

Die horizontalen Kettenglieder des Spurkreuzes können in einfacher Weise in die Kunststoffplatte 14 eingesetzt werden, nämlich in der Form, daß die Kunststoffplatte 14 durch Biegen so verformt wird, daß insbesondere die lippenartigen Vorsprünge 25 bzw. 26 sich öffnen und dadurch die entsprechenden Kettenglieder aufnehmen und, bei Rückkehr der Kunststoffplatte 14 in ihre flächige Form, einschließen können.

Dadurch, daß die Kunststoffplatte 14 in eingebautem Zustand im Laufnetz der Gleitschutzkette und, bei auf dem Fahrzeugreifen aufgezogenen Zustand, auf der Reifenoberfläche aufliegt, ist ein Öffnen der lippenförmigen Vorsprünge 25 bzw. 26 nicht möglich, da sich die Kunststoffplatte 14 nicht verformen kann.

Diese besondere Ausführungsform des Gleitschutzelementes zeichnet sich auch dadurch aus, daß es ohne Werkzeug in das Laufnetz eingebaut werden kann, also auch für eine Nachrüstung durch den Endverbraucher selbst geeignet ist. Vor allen Dingen aber weist dieses Gleitschutzelement ein niederes Gewicht auf, da es ohne Sicherungsmittel in Form von Halteplättchen aus Stahl o. ä. auskommt.

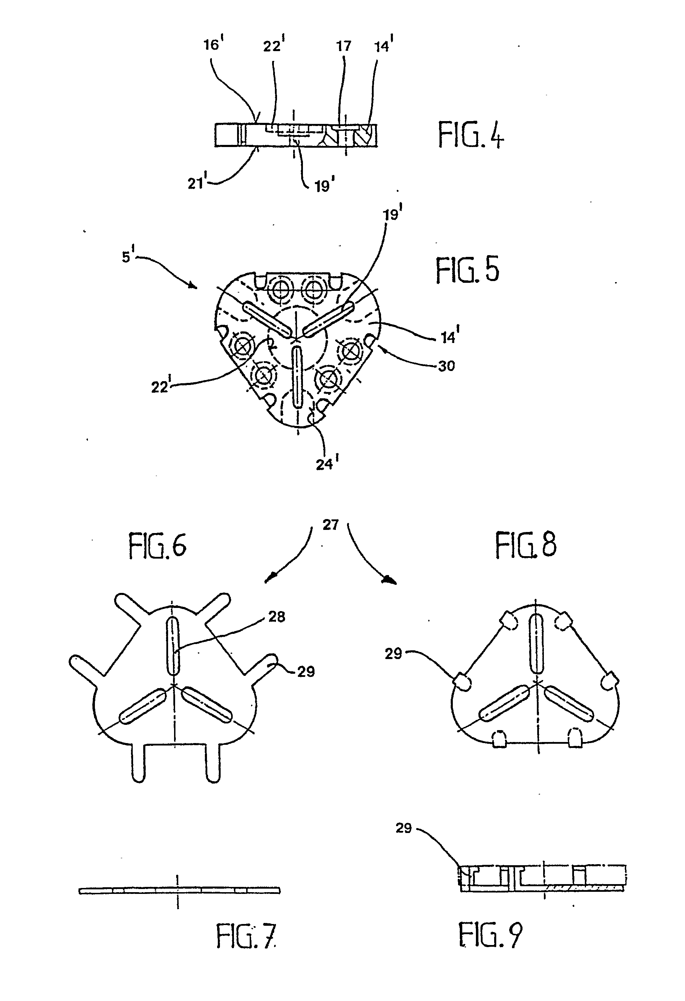

Eine andere Lösungsform zur Sicherung der Gleitschutzelemente auf den Spurkreuzen ist in den weiteren Figuren 4 bis 11 gezeigt. Dort ist wiederum eine Sicherungsplatte 27 vorgesehen, welche eine dünne Kunststoff- oder Metallplatte ist und in den Fig. 6 bis 8 dargestellt ist. Die Sicherungsplatte 27 ist dabei als Stanzteil in Form einer dünnen Metallscheibe ausgeführt und zeigt ebenfalls die annähernd dreieckförmige Form der Kunststoffplatte 14'. Diese Sicherungsplatte 27 weist ebenfalls Schlitze 28 auf, welche mit den Schlitzen 19' des Kunststoffteils 14' korrespondieren.

Weiterhin weist die Sicherungsplatte 27 an ihren drei Seiten jeweils zwei Sicherungszungen 29 auf, welche nach Anbringen der Sicherungsplatte 27 auf der Unterseite 16' der Kunststoffplatte 14' über deren Außenkanten herum aufgebogen werden, wobei für diese Sicherungszungen 29 sowohl in den Seitenkanten der Kunststoffplatte 14' als auch auf deren Oberseite 21' entsprechende Ausnehmungen 30 vorgesehen sind, so daß die Sicherungszungen 29 auf keiner der Seiten bzw. Seitenflächen der Kunststoffplatte 14' überstehen.

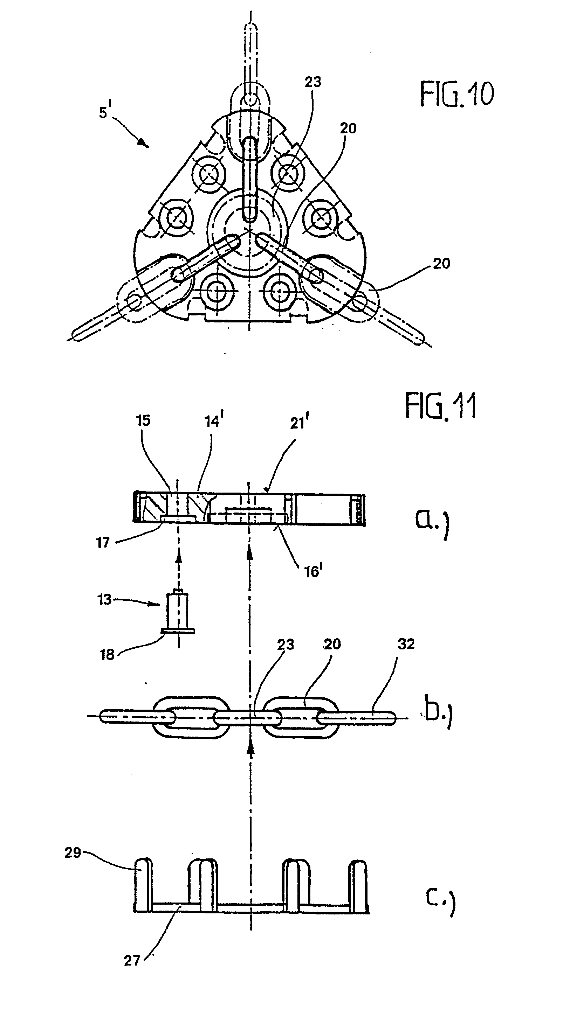

In Fig. 10 ist ein entsprechend zusammengesetztes Gleitschutzelement 5' von der Oberseite 21' her dargestellt und zwar mit angedeutetem Spurkreuz; Fig. 11 a) bis c) zeigen das Gleitschutzelement in einer Explosionsdarstellung.

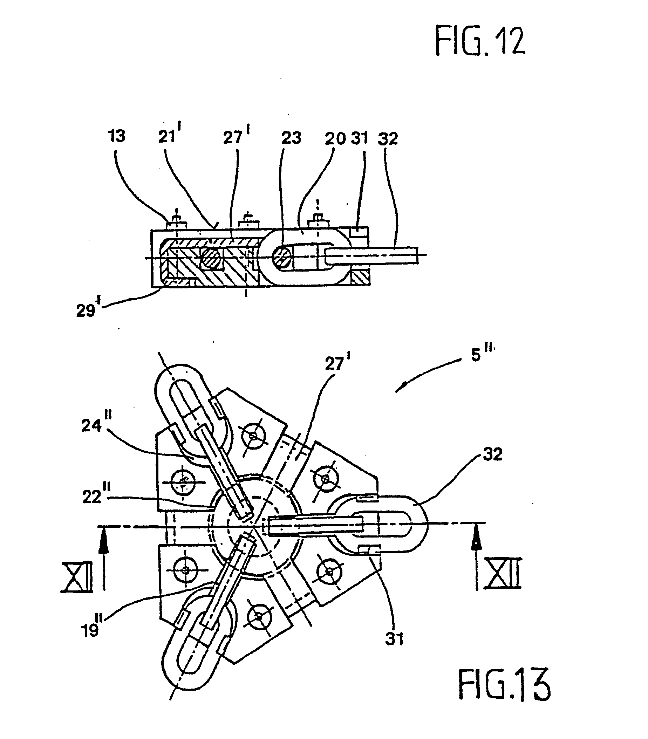

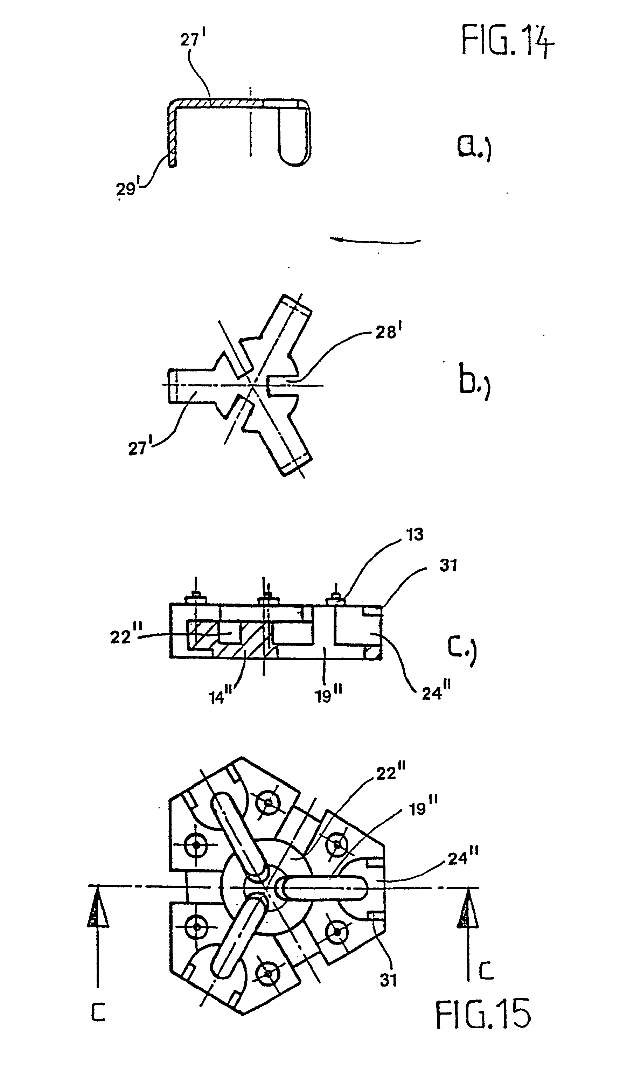

In den Fig. 12 bis 15 ist eine dritte Ausführungsform der plattenförmigen Gleitschutzelemente 5'' dargestellt, bei welcher die Sicherungsplatte 27' in ihrer Form nicht der Form der Kunststoffplatte 14'' angepaßt ist, vielmehr lediglich aus dem Stanzteil gemäß Fig. 14 b) besteht und welches auf der Oberseite 21'' den Horizontalring 23 überdeckend angeordnet ist und mit seinen Sicherungszungen 29' die Kunststoffplatte 14'' jeweils einmal an den entsprechenden drei Seiten umgreift.

Dabei sind auch bei dieser Ausführungsform in der Kunststoffplatte 14'' eine entsprechende Ausnehmung 22'' für den Horizontalring 23, Schlitze 19'' für die an ihm befestigten Endglieder 20 sowie Ausnehmungen 24'' für die wiederum daran anschließenden weiteren Kettenglieder 30 vorgesehen, wobei die übrigen, gegenüber den Ausnehmungen 22'' bis 24'' erhabenen Teile der Kunststoffplatte 14'' über den Horizontalring 23 und die Kettenglieder 30 stollenförmig vorstehen. In diesen stollenförmigen Teilen der Kunststoffplatte 14'' sind die Spikes 13 eingesetzt.

Bei dieser dritten Ausführungsform weisen die Ausnehmungen 24'' jeweils zwei, benachbart zu der Außenkante der Kunststoffplatte 14'' angeordnete Vorsprünge 31 auf, welche verhindern, daß die Kettenglieder 30 und damit auch die Endglieder 20 aus der Kunststoffplatte 14'' herausfallen können. Fig. 15 zeigt die Kunststoffplatte 14'' ohne eingelegtes Spurkreuz und ohne Sicherungsplatte 27', jedoch mit bereits eingesetzten Spikes 13.

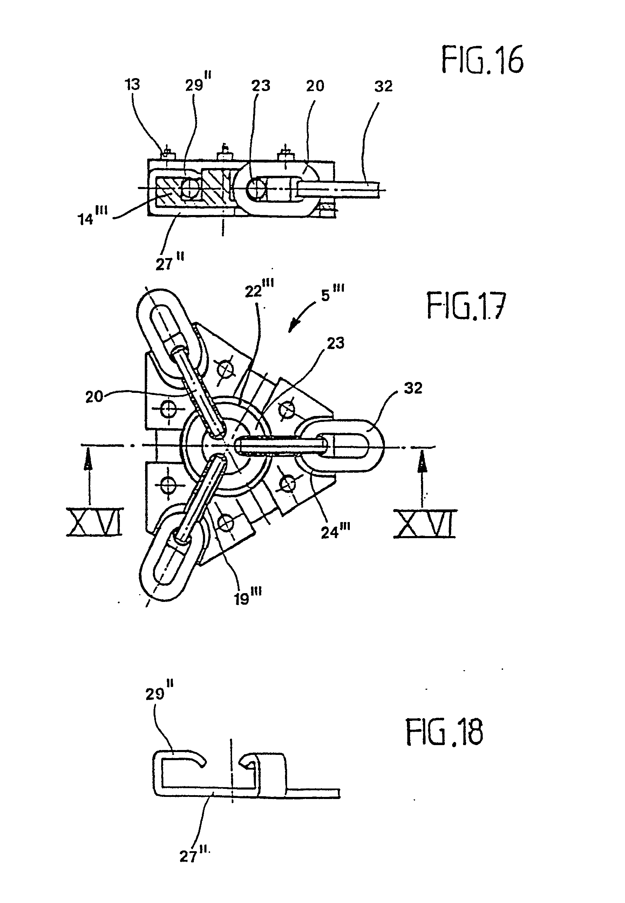

In Fig. 16 bis 18 ist eine vierte Ausführungsform der plattenförmigen Gleitschutzelemente 5''' dargestellt, welche sich gegenüber der vorbeschriebenen dritten Ausführungsform insbesondere dadurch unterscheidet, daß die Sicherungsplatte 27'' auf der Unterseite 16''' der Kunststoffplatte 14''' angeordnet ist und mit ihren besonders ausgestalteten Sicherungszungen 29'' die Kunststoffplatte 14'''an ihren jeweiligen drei Seitenkanten auf der Oberseite umgreift und gleichfalls den Horizontalring 20 hält, wie in Fig. 16 ersichtlich.

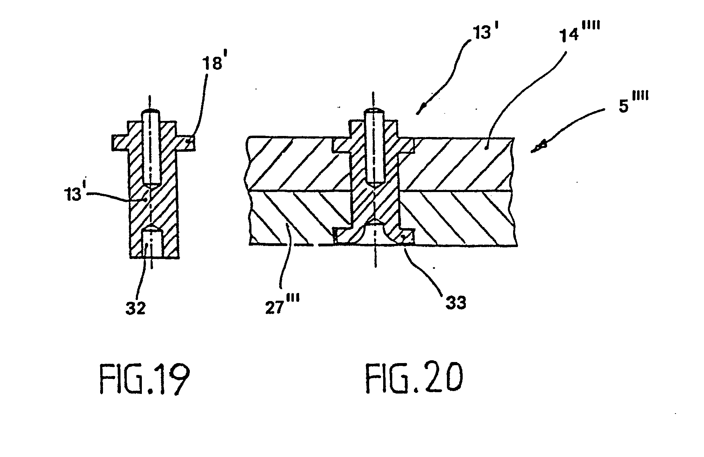

Eine fünfte, in den Zeichnungen nicht näher dargestellte Ausführungsform ist dadurch gekennzeichnet, daß die Sicherungsplatte 27''' der Kunststoffplatte 14'''' kongruent entspricht d. h. beide Bauteile weisen auf den ihnen zugewandten Flächen entsprechende Ausnehmungen für das Spurkreuz auf, schließen dieses sozusagen zwischen sich ein und die jeweiligen Bauteile, also Sicherungsplatte 27''' und Kunststoffplatte 14'''' werden durch die in den Fig. 19 und 20 dargestellten Spikes 13' zusammengehalten.

Dazu weisen diese Spezialspikes 13' an ihrem unteren Ende eine Bohrung 32 auf, in welche ein Spezialwerkzeug eingesetzt werden kann, um den Spike, wie in Fig. 20 dargestellt, zu einem kreisförmigen Rand 33 nietenförmig aufzuweiten, wodurch in Verbindung mit dem tellerringförmigen Flansch 18' eine Verspannung der Sicherungsplatte 27''' mit der Kunststoffplatte 14'''' erfolgt.

## Patentansprüche

1. Gleitschutzelement zum Einbau in das aus Kettenstrangabschnitten gebildete Laufnetz von Gleitschutzketten für Fahrzeugreifen, **dadurch gekennzeichnet,** daß das Gleitschutzelement (5, 5', 5'', 5''', 5'''' oder 6) als aus einem Gummi- oder Kunststoffmaterial hergestellte Platte (7 bzw. 14, 14', 14'', 14''', 14'''') bestimmter Abmessung hergestellt ist, mit seiner Unterseite (10, 16, 16' bzw. 16'') auf der Reifenoberfläche aufliegt und entweder mit seiner Oberseite (12, 21', 21'') unter einem Abschnitt des Laufnetzes der Gleitschutzkette oder mit seiner Unterseite (10) 16, 16', 16'') über einem Abschnitt des Laufnetzes angeordnet ist, wobei die Oberseite oder Unterseite Ausnehmungen (9, 22', 22'', 22''', 24, 24', 24'', 24''') aufweisen, welche den horizontal angeordneten Gliedern (23, 30) des zugeordneten Abschnittes des Laufnetzes formmäßig angepaßt sind und diese aufnehmen und wobei die Platte (7, 14, 14', 14'', 14''', 14'''') Schlitze (8, 19, 19'', 19''') aufweist, in welche die vertikal angeordneten Glieder (20) einstehen.

2. Gleitschutzkette nach Anspruch 1, **dadurch gekennzeichnet,** daß an den Rändern der Ausnehmungen (22, 22'', 24, 24'') Haltemittel (25, 26 bzw. 31) vorgesehen sind, in Form von Rastnasen oder lippenförmigen Vorsprüngen, welche die einzelnen Kettenglieder des Kettenstrangabschnittes bzw. Spurkreuzes teilweise überdeckend halten.

3. Gleitschutzelement nach Anspruch 1, **dadurch gekennzeichnet,** daß der aus Gummi- und/oder Kunststoffmaterial hergestellten ersten Platte (7, 14, 14', 14'', 14''') eine zweite Sicherungsplatte (27, 27', 27'') zugeordnet ist, welche an ihren Rändern Haltemittel (29, 29', 29'') aufweist, die an den Kanten der ersten Platte (7, (14, 14' 14'', 14''') befestigbar sind und wobei die Ausnehmungen (9, 22, 22', 22'', 22''', 24, 24', 24'', 24''') und der darin einliegende Abschnitt des Laufnetzes von der zweiten Sicherungsplatte (27, 27', 27'') mindestens teilweise abgedeckt und gehalten ist und wobei die zweite Sicherungsplatte (27, 27', 27'') ebenfalls Ausnehmungen bzw. Schlitze (28, 28') für Kettenglieder des Laufnetzes aufweist.

4. Gleitschutzelement nach Anspruch 3, **dadurch gekennzeichnet,** daß die Sicherungsplatte (27, 27', 27'') sowohl auf der Ober- als auch auf der Unterseite der ersten Platte (7, 14, 14', 14'', 14''') angeordnet sein kann, je nach Anordnung der Ausnehmungen (9, 22, 22', 22''', 24, 24', 24'', 24''').

5. Gleitschutzelement nach Anspruch 3, **dadurch gekennzeichnet,** daß die Sicherungsplatte (27, 27', 27'') als metallisches Stanzteil und die Haltemittel (29, 29', 29'') als Sicherungszungen ausgebildet sind, welche um die Kanten der ersten Platte (7, 14, 14', 14'', 14''') herumgebogen sind.

6. Gleitschutzelement nach Anspruch 1, **dadurch gekennzeichnet,** daß die erste Platte (7, 14, 14', 14'', 14''') auf ihrer Oberseite stollenförmige Vorsprünge zur Erhöhung der Greifwirkung aufweist.

7. Gleitschutzelement nach Anspruch 1, **dadurch gekennzeichnet,** daß in der ersten Platte (7, 14, 14', 14'', 14''') eine Mehrzahl von Spikes (13) angeordnet ist.

8. Gleitschutzelement nach Anspruch 3, **dadurch gekennzeichnet,** daß die Sicherungsplatte (27'''')die gleichen Abmessungen wie die erste Platte(14'''')aufweist und ebenfalls aus Gummi und/oder Kunststoff hergestellt ist und daß beide Platten durch die darin angeordneten Spikes (13') nach Art einer Nietverbindung miteinander verbunden sind.

9. Gleitschutzelement nach Anspruch 8, **dadurch gekennzeichnet,** daß die Spikes (13') an ihren der Fahrbahn zugekehrten oberen Ende einen tellerringförmigen Flansch (18') aufweisen, welcher in eine entsprechende Erweiterung in der ersten Platte (14'''') einsteht und an ihrem der Reifenoberfläche zugekehrten unteren Ende eine hohlzylindrische Bohrung (32) aufweisen, welche mittels eines geeigneten Werkzeuges nietartig aufweitbar und in eine in der unteren Platte (27''') vorgesehene entsprechende Erweiterung einbringbar ist.

FIG.1

FIG.2a

FIG.2b

FIG.3a

FIG.3c

FIG.3b

FIG.4

FIG.5

FIG.6

FIG.7

FIG.8

FIG.9

FIG.10

FIG.11

a.)

b.)

c.)

11

FIG.12

13  21'  27'  23  20 31  32

29'

24"

22"

19"

27'

5"

32

31

XII

XII

FIG.13

FIG.14

27'

a.)

29'

28'

b.)

27'

13

31

22"

C.)

14"        19"        24"

FIG.15

22"

19"

24"

31

C

C

FIG.16

FIG.17

FIG.18

FIG.19

FIG.20